# FASCICULE DE BREVET EUROPEEN

(11) **EP 0 513 060 B1**
(45) Date de publication et mention de la délivrance du brevet: **14.12.1994**
(21) Numéro de dépôt: 91902719.3
(22) Date de dépôt: 08.01.1991
(51) Int. Cl.: C04B 28/00, C04B 28/04, C04B 7/02

(54) **PROCEDE SUPPRIMANT LA REACTION AGREGAT-ALCALIN DANS LES BETONS, ET CIMENT OBTENU PAR CE PROCEDE**
VERFAHREN ZUR UNTERDRÜCKUNG DER REAKTION ZWISCHEN ALKALI UND ZUSCHLÄGEN IN BETON UND NACH DEM VERFAHREN HERGESTELLTER ZEMENT
METHOD FOR ELIMINATING THE ALKALI-AGGREGATE REACTION IN CONCRET AND CEMENT THEREBY OBTAINED

(30) Priorité: 05.02.1990 FR 9001278
(43) Date de publication de la demande: 19.11.1992
(73) Titulaire: Davidovits, Joseph, F-02100 Saint-Quentin (FR)
(72) Inventeur: Davidovits, Joseph, F-02100 Saint-Quentin (FR)
(86) Numéro de dépôt international: FR9100007
(87) Numéro de publication internationale: WO9111405

(56) Documents cités:
- EP-A- 0 026 687
- WO-A-82/00816
- WO-A-89/02878
- US-A- 4 509 985
- US-A- 4 640 715
- US-A- 4 642 137
- World Patent Index Latest, week 34, accession No. 86-223080, 14 July 1986, Derwent Publications Ltd. & JP-A-61155239.

## Description

La présente invention concerne un procédé permettant de supprimer la dangereuse réaction agrégat-alcalin dans les bétons. Plus précisément les compositions minérales décrites dans l'invention permettent l'obtention d'un ciment rapide géopolymèrique à base de ciment portland qui, par activation alcaline, empêche la formation dans ces bétons d'un composé pouvant générer un aluminate alcalin soluble responsable de la réaction destructrice agrégat-alcalin.

Il est connu depuis longtemps que le durcissement des liants hydrauliques traditionnels peut être accéléré par l'addition de faible quantité de sels alcalins ou d'hydroxydes alcalins. Cette accélération de la prise ou du durcissement est souvent appelée activation alcaline. Jusqu'à présent les applications de cette activation alcaline étaient limitées par certains inconvénients, comme en particulier l'attaque et la destruction du béton par la réaction agrégat-alcalin. La présente invention apporte un remède à ces inconvénients et permet donc d'exploiter les avantages de l'activation alcaline sans en subir les graves défauts.

L'activation alcaline telle que employée dans la présente invention est obtenue avec des sels alcalins tels que carbonate de sodium et/ou de potassium ou des silicates alcalins solubles ou des hydroxydes de sodium et/ou de potassium, ces éléments alcalins étant employés en quantité telle que dans la composition minérale le rapport molaire entre les oxydes [M₂O]/[SiO₂] soit [M₂O]/[SiO₂]<0,1, ce qui est équivalent à un rapport pondéral analytique M₂O/SiO₂<0,15; dans le cadre préféré de l'invention, M représentant K, l'activation alcaline s'effectuant avec le carbonate de potassium. Tout homme de l'art connait les vertus accélératrices du carbonate de potassium et aussi l'obligation d'empêcher la prise immédiate du ciment (flash-set) par ajout soit d'acide citrique, soit de citrate de potassium.

Le moyen d'investigation utilisé pour différencier les ciments décrits dans la présente invention avec les ciments traditionnellement obtenus par activation alcaline des silico-aluminates de calcium, est le spectre de Résonance Magnétique Nucléaire (MAS-NMR). On trouvera quelques références concernant les spectres MAS-NMR pour les géopolymères et les liants hydrauliques dans la revue *Geopolymer '88*, Volume 2, pages 149-197 publiée par le Geopolymer Institute, Université de Technologie de Compiègne, France. Pour les produits résultant de la réaction de géopolymèrisation, le spectre MAS-NMR de ²⁷Al possède un pic unique à 55±5ppm, caractéristique de la coordination Al(IV) correspondant à un tétraèdre (AlO₄) de type Q₄(4Si), alors que les composés d'hydratation obtenus dans les liants hydrauliques traditionnels ont eux un pic à 0 ppm, correspondant au cation Al en coordination VI (AlO₆), c'est à dire de l'hydroxy-aluminate de calcium.

Les compositions minérales géopolymèriques à base de ciment portland, selon la présente invention, permettant par activation alcaline [M₂O]/[SiO₂]<0,1 l'obtention d'un ciment géopolymèrique à durcissement rapide, comprennent essentiellement les trois réactifs suivants:
a) 100 parties en poids d'un alumino-silicate de calcium basique x(CaO).y(Al₂O₃).(SiO₂) dans lequel "x" a une valeur comprise entre 2 et 3,5 et "y" a une valeur comprise entre 0 et 0,2, dont le degré de polymérisation du tétraèdre (SiO₄) est (Q0) comme déterminé par le spectre MAS-NMR pour ²⁹Si, et dont le spectre d'analyse MAS-NMR pour ²⁷Al possède une résonance principale égale à 75±5ppm par rapport à AlCl₃ correspondant à un tétraèdre (AlO₄) de type Q0(0Si),
b) 10 à 30 parties en poids d'un alumino-silicate synthétique appartenant à la classe des silicates dont la structure minéralogique est en feuillet et dont le spectre d'analyse en Résonance Magnétique Nucléaire MAS-NMR pour ²⁷Al possède au moins une résonance principale à 20±5ppm et/ou 50±5ppm, par rapport à AlCl₃,
c) 0 à 10 parties en poids d'un disilicate hydraté (Ca)(H₃SiO₄)₂ dont le degré de polymérisation du tétraèdre SiO₄ est (Q1) comme déterminé par la valeur du spectre MAS-NMR pour ²⁹Si.

Les compositions minérales de l'invention sont appelées compositions minérales géopolymèriques, car le ciment obtenu résulte d'une réaction de polycondensation minérale, dite géopolymérisation, avec, en plus, le processus traditionnel propre aux liants hydrauliques (ciment portland) dans lesquels le durcissement est le résultat d'une hydratation des aluminates de calcium et des silicates de calcium.

Le spectre MAS-NMR de ²⁹Si permet également de faire une différentiation très nette entre les géopolymères et les liants hydrauliques à base de silico-aluminates de calcium (type ciment portland). Si on représente le degré de polymérisation du tétraèdre SiO₄ par Qn (n=0,1,2,3,4), on peut faire la distinction entre les monosilicates (Qo), les disilicates (Q1), les groupes de silicate (Q2), les silicates greffés (Q3) et les silicates faisant partie d'un réseau tridimensionnel (Q4). Ces degrés de polymérisation sont caractérisés en MAS-NMR du ²⁹Si par les pics suivants: (Qo) de -68 à -76 ppm; (Q1) de -76 à -80; (Q2) de -80 à -85 ppm; (Q3) de -85 à -90 ppm; (Q4) de -91 à -130 ppm. Les pics caractérisant les géopolymères se trouvent dans la zone -85 à -100 ppm et correspondent au réseau tridimensionnel (Q4) caractéristique des poly(sialates) (Si-O-Al-O-) et poly(sialate-siloxo) (Si-O-Al-O-Si-O-). Au contraire, l'hydratation des liants hydrauliques conduisant au silicate de calcium hydraté C-S-H (selon la terminologie employée dans la chimie des ciments) produit des pics se situant dans la zone -68 à -85 ppm, soit le monosilicate (Qo) ou le disilicate (Q1)(Q2); [voir par exemple J. Hjorth et J.Skibsted, Cement and Concrete Research, Vol. 18, nr.4, (1988); voir également J.F. Young, J. Am. Ceram. Soc, 71 (3), pp. C-118 (1988)].

On a proposé dans le passé des liants et ciments possédant un durcissement rapide en milieu alcalin. On citera par exemple les brevets Forss, US 4.306.912, Heitzmann et al., US 4.640.715 /US 4.642.137 /US 4.842.649 /WO 89/02878, Gouvenot, FR 81.03410 /US 4.514.228, Davidovits et al., US 4.472.199 /EP 153.097, ainsi que le brevet Shinetsu JP 61-155239. Dans certains, le rapport molaire [M₂O]/[SiO₂] est supérieur à 0,1, en général compris entre 0,20 et 0,50, comme dans les brevets US 4.472.199, US 4.640.715, US 4.642.137. Ils sont donc en dehors du cadre de la présente invention. Dans d'autres, par exemple les brevets US 4.306.912, US 4.842.649, US 4.514.228 et JP 61-155239, l'activation alcaline des liants hydrauliques à base de ciment portland, est du type [M₂O]/[SiO₂]<0,1, essentiellement par addition de 0-3% en poids de carbonate de potassium et 0-3% en poids d'acide citrique (ou citrate de potassium).

Il est connu que, du point de vue chimique, l'activation alcaline [M₂O]/[SiO₂]<0,1 du ciment portland ou des laitiers de haut fourneau utilises comme liant hydrauliques, conduit à la formation de silicates de calcium hydraté de types C-S-H avec quelques substitutions par les ions alcalins et l'aluminium. Dans ces hydrates, les ions alcalins ne sont fixés que par simples liaisons ioniques. Ils pourront donc facilement migrer et venir attaquer les agrégats siliceux provoquant ainsi l'expansion et la destruction du béton. On peut trouver une documentation exhaustive sur cette réaction agrégat-alcalin, ainsi que les remèdes préconisés par l'art antérieur, dans les *Proceedings of the 3rd International Conference*, Trondheim, Norway, 1989, "Fly Ash, Silica Fume, Slag and Natural Pozzolans in Concrete", SP-114, Volume 1 et 2, American Concrete Institute ACI, USA. Cependant, l'étude approfondie de l'art antérieur ne permet pas de dégager de lois physico-chimiques précises quant à la suppression de la réaction agrégat-alcalin Les résultats sont contradictoires et non reproductibles, si bien que la tendance générale dans l'industrie cimentière consiste à fournir des ciments portland contenant le moins possible d'alcalin et, à fortiori, de ne pas employer l'activation alcaline.

On a pu maintenant déterminer avec précision la nature de ces hydrates C-S-H, à l'aide du spectre MAS-NMR. Ainsi, on peut déduire de l'étude publiée par Komameni et al. dans *J. Am. Ceram. Soc.* 72, pp. 1668-74 (1989) ainsi que dans *Cement and Concrete Research* 15, pp.723-728 (1985), que l'activation alcaline d'un alumino-silicate de calcium basique x(CaO).y(Al₂O₃).(SiO₂) dans lequel "x" a une valeur comprise entre 2 et 3,5 et "y" a une valeur comprise entre 0 et 0,2, favorise la formation d'une structure proche de celle de la tobermorite substituée, pour laquelle le spectre MAS-NMR ²⁷Al présente une résonance principale à 64 ppm correspondant à un tétraèdre (AlO₄) de type Q₃(3Si), et le spectre MAS-NMR ²⁹Si indique que le degré de polymérisation du tétraèdre SiO₄ est (Q₂)(0Al), (Q₂)(1Al), (Q₃)(0Al), (Q₃)(1Al). En d'autres termes, cette structure n'est pas du type polymérisée tri-dimensionnelle. Dans cette structure, les hydrates alcalins, plus particulièrement les aluminates de sodium ou de potassium, "AlOH⁻Na⁺, "AlOH⁻K⁺, sont toujours libres et seront donc à la fois sensibles aux agressions acides et à la réaction avec les agrégats siliceux.

Le composé associé à l'activation alcaline du ciment portland possède une résonance MAS-NMR ²⁷Al de 64-66 ppm correspondant à un tétraèdre (AlO₄) de type Q₃(3Si), c'est à dire un alumino-silicate alcalin hydraté dont la structure n'est pas tri-dimensionnelle. L'intensité de la résonance MAS-NMR ²⁷Al de 64-66 ppm augmente avec la quantité d'alcalin présente dans le système. Ce composé génère la formation d'aluminate alcalin soluble qui est la cause de la réaction destructrice agrégat-alcalin. Ainsi, dans l'antériorité Shinetsu JP 61.15239, l'addition d'aluminate de calcium favorise la formation d'aluminate alcalin soluble par simple réaction ionique avec le carbonate de potassium. En d'autres termes, dans le brevet Shinetsu, on ne diminue pas le danger de réaction agrégat-alcalin dans les bétons; il y aurait plutôt une aggravation de celle-ci.

Au contraire, dans le cadre de l'invention, la demanderesse a pu constater qu'il n'y a pas formation d'aluminates alcalins libres, mais synthèse d'une structure tri-dimensionnelle géopolymèrique caractérisée par un spectre MAS-NMR pour ²⁷Al ayant une résonance principale égale à 55±5ppm par rapport à AlCl₃ correspondant à un tétraèdre (AlO₄) de type Q₄(4Si), donc très différente de la structure obtenue par activation alcaline du ciment portland.

La demanderesse a eu la surprise de constater que cette transformation du spectre MAS-NMR pour ²⁷Al, c'est à dire le passage de la résonance 66±5ppm à la résonance 55±5ppm, est obtenue en ajoutant dans la composition minérale un alumino-silicate synthétique dont le spectre d'analyse en Résonance Magnétique Nucléaire MAS-NMR pour ²⁷Al possède au moins une résonance principale à 20±5ppm et/ou 50±5ppm. Les alumino-silicates qui peuvent être caractérisés par ce spectre MAS-NMR sont essentiellement ceux dont la structure minéralogique est en feuillet. Dans les exemples préférés de l'invention ce seront soit l'oxyde alumino-silicate {9[Si₂O₅,Al₂O₂],[Si₂O₅,Al₂(OH)₄]} obtenu par calcination d'un matériau kaolinitique, soit un verre contenant un alumino-silicate de calcium 2CaO.Al₂O₃.SiO₂, de la famille minéralogique de la gehlinite, obtenu par vitrification d'un matériau argileux.

Un des objets de la présente invention concerne un procédé permettant l'obtention d'un ciment rapide, à base de ciment portland, avec un spectre d'analyse en Résonance Magnétique Nucléaire MAS-NMR pour ²⁷Al dont une résonance principale est égale à 55±5ppm correspondant à un tétraèdre (AlO₄) de type Q₄(4Si). Le dit ciment rapide est obtenu par activation alcaline [M₂O]/[SiO₂]<0,1 d'un alumino-silicate de calcium basique x(CaO).y(Al₂O₃).(SiO₂) dans lequel "x" a une valeur comprise entre 2 et 3,5 et "y" a une valeur comprise entre 0 et 0,2. On empêche la formation d'un ciment contenant un alumino-silicate alcalin hydraté dont le spectre MAS-NMR pour ²⁷Al possède une résonance à 66±5ppm correspondant à un tétraèdre (AlO₄) de type Q₃(3Si), en faisant réagir une composition minérale contenant:
a) 100 parties en poids du dit alumino-silicate de calcium,
b) 10 à 30 parties en poids d'alumino-silicate synthétique en poudre appartenant à la classe des silicates dont la structure minéralogique est en feuillet et dont le spectre d'analyse en Résonance Magnétique Nucléaire MAS-NMR pour ²⁷Al possède au moins une résonance principale à 20±5ppm et/ou 50±5ppm par rapport à AlCl₃,
c) 0 à 10 parties en poids d'un disilicate hydraté (Ca)(H₃SiO₄)₂ dont le degré de polymérisation du tétraèdre (SiO₄) est (Q₁) comme déterminé par la valeur du spectre MAS-NMR peur ²⁹Si.

Les quantités d'alcali M₂O ajoutées par l'activation alcaline ne sont pas suffisantes pour transformer tout l'aluminate de calcium, présent dans le ciment portland, en alumino-silicate alcalin possédant un spectre d'analyse en Résonance Magnétique Nucléaire MAS-NMR pour ²⁷Al dont une résonance principale est égale à 55±5ppm, correspondant à un tétraèdre (AlO₄) de type Q₄(4Si). La partie non activée par les alcalins, c'est à dire l'excès d'aluminate de calcium, se transformera normalement en hydroxyde d'alumine et/ou sulfo-aluminate de calcium hydraté. Ainsi, le spectre MAS-NMR de l'aluminate de calcium hydraté s'ajoutera au précédent si bien que, pour le dit ciment rapide géopolymèrique selon l'invention, le spectre d'analyse en Résonance Magnétique Nucléaire MAS-NMR pour ²⁷Al possède une résonance égale à 55±5ppm par rapport à AlCl₃ correspondant à un tétraèdre (AlO₄) de type Q₄(4Si) et une résonance à 0±5ppm par rapport à AlCl₃ correspondant au cation Al en coordination VI (AlO₆) dans l'Hydroxyde d'Alumine et/ou le sulfo-aluminate de calcium hydraté (ettringite), le rapport entre l'intensité de résonance 55±5ppm de (AlO₄) de type Q₄(4Si) et l'intensité de la résonance 0±5ppm de (AlO₆), (AlO₄)/(AlO₆) est égal ou compris entre 0,1 et 1.

Lorsque le dit alumino-silicate synthétique est l'oxyde alumino-silicate de formule {9[Si₂O₅,Al₂O₂],[Si₂O₅,Al₂(OH)₄]} obtenu par calcination d'un matériau kaolinitique, la dite calcination est conduite de telle sorte que le dit oxyde alumino-silicate possède un spectre d'analyse en Résonance Magnétique Nucléaire MAS-NMR pour ²⁷Al ayant en supplément des deux résonances principales à 20±5ppm et 50±5ppm, une résonance secondaire à 0±5ppm de beaucoup plus faible intensité, par rapport à AlCl₃.

En effet, selon les conditions technologiques de la calcination, l'alumino-silicate synthétique pourra remplir son rôle tel que décrit dans la présente invention, ou il ne le pourra pas. Ainsi, si la calcination est faite à une température comprise entre 550°C et 650°C, la résonance principale du spectre MAS-NMR ²⁷Al est 0±5ppm, indiquant un déficit en Al de coordination (IV-V). Si la calcination est faite à une température supérieure à 900°C, la résonance principale du spectre MAS-NMR ²⁷Al est également 0±5ppm, indiquant également un déficit en Al de coordination (IV-V). Plus la température s'élève (1000°C-1100°C) et plus le matériau calciné contient de la mullite dont la résonance principale du spectre MAS-NMR ²⁷Al est également 0±5ppm.

Les températures idéales de calcination se situent entre 700°C et 800°C. Cependant, même à ces températures, le type de four employé sera favorable ou défavorable à la production de l'oxyde silico-aluminate {9[Si₂O₅,Al₂O₂], [Si₂O₅,Al₂(OH)₄]} préconisé dans cette invention. Ainsi, la calcination en four fixe, permettant de conserver pendant toute la calcination une pression de vapeur d'eau suffisante, livre le matériau réactif possédant le spectre MAS-NMR désiré, alors que la technique rapide de calcination, telle qu'elle est habituellement employée en cimenterie à l'aide de four tournant, conduit à un déficit en Al de coordination (IV-V).

En général les produits industriels connus sous les noms de kaolins calcinés basse température ou haute température, destinés à l'industrie papetière, et communément appelés métakaolin, ne conviennent pas dans le cadre de l'invention, pour les raisons expliquées ci-dessus. Il en est de même des métakaolins produits par les cimentiers, en four rotatif, par cuisson rapide. Ceci est par exemple le cas pour le brevet Heitzmann et al. US 4.842.649 dont la caractéristique et le mode de fabrication sont identifiés par la norme US ASTM C618-85 sur les matériaux pouzzolaniques naturels calcinés.

Les formulations décrites dans le brevet Heitzmann US 4.842.649 sont essentiellement destinées à faciliter le durcissement du ciment portland à des températures inférieure à 0°C; à cette fin, le métakaolin utilisé est relié au carbonate de potassium par la relation: 1 partie de carbonate de potassium + 1/2 partie de métakaolin sont égaux à 2 parties de carbonate de potassium, c'est à dire que le métakaolin peut remplacer le carbonate de potassium. Or si le carbonate de potassium joue le rôle principal dans l'activation alcaline, le métakaolin ne possède aucun élément alcalin. Il est chimiquement neutre.

Il semble donc que, dans le brevet Heitzmann US 4.842.649, ce métakaolin permette d'augmenter l'action du carbonate de potassium. Or, comme à froid, la solubilité du carbonate de potassium diminue, le métakaolin utilisé dans ce brevet aurait la faculté d'augmenter la solubilité du carbonate de potassium, ou plus vraisemblablement de l'ion potassium, dans ces basses températures.

La formation de complexe permettant l'échange libre des ions potassium dans le milieu réactionnel tel que décrit dans le brevet Heitzmann ne peut s'effectuer que si la plus grande partie de l'aluminium présent dans le métakaolin se trouve en coordination VI, de type (AlO₆), typique de la résonance à 0±5ppm, c'est à dire d'une température de calcination inférieure à 650°C, ou d'un temps de calcination très bref dans un four rotatif. Ceci nous permet de conclure que ce métakaolin employé dans les formulations Heitzmann ne correspond pas à l'oxyde silico-aluminate {9[Si₂O₅,Al₂O₂], [Si₂O₅,Al₂(OH)₄]} préconisé dans la présente invention.

De même, les sous produits industriels, alumino-silicates, connus sous le terme de cendres volantes, provenant de la combustion des charbons, ne sont pas des alumino-silicates synthétiques répondant aux conditions spécifiées dans la présente invention. Ces cendres volantes s'apparentent à des vertes dont l'élément minéralogique dominant est la mullite. Dans la mullite, l'aluminium est en majorité sous la forme en coordination VI, de type (AlO₆), dont la résonance principale du spectre MAS-NMR ²⁷Al est 0±5ppm, associé avec une coordination IV correspondant à une résonance à 60 ppm, c'est à dire différente de celle préconisée dans la présente invention. De plus, la structure minéralogique de la mullite n'appartient pas à la classe des silicates en feuillets.

C'est en général ce type de cendres volantes qui est utilisé dans les formulations employées dans l'art antérieur, comme par exemples le brevet Forss. Selon la norme US, elles correspondent à des cendres de classe F, ou selon la norme ISO, à des cendres volantes pauvres en CaO. Cependant, dans le brevet Heitzmann, il est recommandé d'employer des cendres de classe C, ou riche en CaO.

En effet, l'action recherchée par les formulations du brevet US 4.842.649 étant la prise à très basse température, il est nécessaire de favoriser la solubilisation optimale des ingrédients, à ces températures. L'adjuvant généralement ajouté au carbonate de potassium est l'acide citrique. Dans les conditions de température normale, l'acide citrique réagit avec le carbonate de potassium pour former le citrate de potassium. Or ce citrate de potassium est difficilement soluble à froid, alors que le citrate de calcium est au contraire plus soluble à froid qu'à chaud. Les cendres volantes riches en CaO, employées dans les formulations de ce brevet Heitzmann, contiennent essentiellement de la chaux CaO libre afin de faciliter la formation du citrate de calcium plus soluble. Ceci indique une température de calcination qui seraient de l'ordre de 950°C-1100°C. Or, comme on peut le lire dans l'art antérieur décrit dans l'article SP114-19 de la publication de l'American Concrete Institute cité plus haut, les cendres de classe C sont précisément celles qui sont les plus dangereuses du point de vue de la réaction agrégat-alcalin.

Un autre alumino-silicate synthétique appartenant à la classe des silicates dont la structure minéralogique est en feuillet et dont le spectre d'analyse en Résonance Magnétique Nucléaire MAS-NMR pour ²⁷Al possède au moins une résonance principale à 20±5ppm et/ou 50±5ppm par rapport à AlCl₃, appartient à la famille minéralogique de la gehlinite, alumino-silicate de calcium 2CaO.Al₂O₃.SiO₂.

Il est principalement obtenu par vitrification d'un matériau argileux, la dite vitrification étant conduite de telle sorte que dans le verre ainsi obtenu le dit alumino-silicate de calcium possède un spectre d'analyse en Résonance Magnétique Nucléaire MAS-NMR pour ²⁷Al dont la résonance principale se situe à 45±7ppm, par rapport à AlCl₃.

Son action ne semble pas encore entièrement expliquée, mais à l'évidence elle est liée avec la faculté présentée par certains verres contenant cet alumino-silicate de calcium, à réagir dans l'activation alcaline, pour produire le troisième réactif préconisée dans la présente invention, à savoir le disilicate de calcium Ca(H₃SiO₄)₂.

On peut fabriquer séparément le disilicate de calcium Ca(H₃SiO₄)₂, par exemple par réaction hydrothermale entre la chaux et la silice.

Cependant, selon une méthode préférée de l'invention, il sera produit, à l'état naissant, dans le liant, après l'addition de l'eau nécessaire à la solubilisation des différents réactifs en poudre. La matière de départ est un silicate de calcium basique, c'est à dire avec le rapport atomique Ca/Si supérieur ou égal à 1. Ce sera par exemple la wollastonite Ca(SiO₃), la gehlenite (2CaO.Al₂O₃.SiO₂), l'akermanite (2CaO.MgO.2SiO₂). Lorsque les grains de ces matières sont mis en contact avec une solution alcaline (NaOH ou KOH) il se produit très rapidement une désorption de CaO de telle sorte que le rapport atomique Ca/Si devient inférieur à 1 et tend vers 0,5 pour les silicates basiques initialement de rapport Ca/Si égal ou inférieur à 2, comme la wollastonite, la gehlenite, l'akermanite.

Ainsi, comme on peut le suivre par la spectrométrie photoélectronique aux Rayons X. (X.p.s.) et par l'analyse des rapports Ca₂ₚ/Si₂ₚ comme il est indiqué par M. Regourd, Phil. Trans. Royal Society London, A.310, pages 85-92 (1983), cette attaque alcaline du silicate basique produit un silicate faiblement basique de rapport atomique Ca/Si=0,5, soit précisément le disilicate de calcium Ca(H₃SiO₄)₂. Ce processus est très régulier et peut être complet en 30 minutes, à la température ambiante.

On pense que le disilicate de calcium Ca(H₃SiO₄)₂ ainsi formé réagit avec l'aluminate alcalin produit par l'alumino-silicate de calcium basique x(CaO).y(Al₂O₃).(SiO₂), avec formation de liaisons géopolymèriques de type poly(sialate-siloxo) (-Si-O-Al-O-Si-O-), pour aboutir à la structure tridimensionnelle géopolymèrique dans laquelle l'aluminium est sous la forme d'un tétraèdre (AlO₄) de type Q₄(4Si) déterminé par son spectre d'analyse en Résonance Magnétique Nucléaire MAS-NMR pour ²⁷Al qui possède une résonance égale à 55±5ppm par rapport à AlCl₃.

Certains sous-produits industriels sont des verres contenant les produits alumino-silicates de calcium décrits ci-dessus. On peut citer par exemple le laitier de haut fourneau basique. Cependant, les articles SP114-17 et SP114-20 de la publication de l'American Concrete Institute citée plus haut, indiquent que le laitier de haut fourneau employé à raison de moins de 40-45% en poids par rapport au ciment portland, aggrave le danger de réaction agrégat-alcalin. Au contraire, dans le cadre de l'invention, bien que l'addition de ces sous-produits industriels soit inférieure à 30% en poids, il y a suppression de cette dangereuse réaction agrégat-alcalin.

On connait également certaines scories provenant de la combustion à haute température des charbons, la température devant être suffisamment haute pour que ces scories, quelque fois appelées cendres, soient entièrement vitrifiées et ne contiennent pas de chaux CaO libre.

Dans le cadre de la présente invention, ces sous-produits industriels seront sélectionnés pour leur utilisation, essentiellement en fonction de leur spectre d'analyse en Résonance Magnétique Nucléaire MAS-NMR pour ²⁷Al qui devra posséder au moins une résonance principale à 20±5ppm et/ou 50±5ppm par rapport à AlCl₃.

Les formulations pourront également contenir tous les adjuvants classiques et les charges nécessaires et suffisantes employées habituellement dans les liants hydrauliques.

Les exemples suivants permettent d'illustrer la présente invention. Ils n'ont pas de caractère limitatif sur la portée globale de l'invention telle que présentée dans les revendications. Toutes les parties indiquées sont en poids.

### Exemple 1:

L'alumino-silicate de calcium basique x(CaO).y(Al₂O₃).(SiO₂) correspond à un ciment portland dont l'analyse chimique est:

| | |
|---|---|
| CaO | 63.25 |
| SiO₂ | 21.84 |
| Fe₂O₃ | 2.48 |
| Al₂O₃ | 4.34 |
| Mgo | 2.53 |
| SO₃ | 2.27 |
| TiO₂ | 0.25 |
| P₂O₅ | 0.12 |
| K₂O | 0.89 |
| Na₂O | 0.26 |

Les spectres d'analyse en Résonance Magnétique Nucléaire sont les suivants:
MAS-NMR pour ²⁷Al: résonance principale égale à 75 ppm par rapport à AlCl₃ correspondant à un tétraèdre (AlO₄) de type Q₀(0Si),
MAS-NMR pour ²⁹Si: résonance principale égale à -77 ppm par rapport à TMS, correspondant à un degré de polymérisation du tétraèdre (SiO₄) égal à (Q₀).

On réalise un mélange en poudre contenant:
100 parties de ce ciment,
2,5 parties d'acide citrique
2,5 parties de carbonate de potassium.

Avec ce mélange, on réalise un mortier standard au sable, dans lequel le rapport eau/ciment est 0,28. La prise du mortier débute au bout de 30 minutes, et après 4 heures à température ambiante, la résistance à la compression est de 21 MPa, et après 24 heures de 40 MPa.

Les spectres d'analyse en Résonance Magnétique Nucléaire sont les suivants:
MAS-NMR pour ²⁷Al: résonance à 66 ppm correspondant à un tétraèdre (AlO₄) de type Q₃(3Si), et résonance à 0 ppm, correspondant au cation Al en coordination VI (AlO₆) dans l'Hydroxyde d'Alumine et/ou le sulfo-aluminate de calcium hydraté (ettringite).
MAS-NMR pour ²⁹Si: pics se situant dans la zone -68 à -85 ppm correspondant au monosilicate (Qo) et au disilicate (Q1)(Q2).

### Exemple 2:

On réalise un mélange en poudre contenant:
100 parties de ciment selon l'Exemple 1),
2,5 parties d'acide citrique
2,5 parties de carbonate de potassium,
6 parties d'alumino-silicate synthétique de formule

{9[Si₂O₅,Al₂O₂],[Si₂O₅,Al₂(OH)₄]}

10 parties de laitier de haut fourneau basique.

l'alumino-silicate synthétique de formule {9[Si₂O₅,Al₂O₂],[Si₂O₅,Al₂(OH)₄]} est obtenu par calcination d'un matériau kaolinitique, la dite calcination étant conduite à 750°C pendant 5 heures dans un four fixe, de telle sorte que le dit oxyde alumino-silicate possède un spectre d'analyse en Résonance Magnétique Nucléaire MAS-NMR pour ²⁷Al dans lequel les intensités des résonances à 22 ppm et 50 ppm, sont 40 % supérieures à l'intensité de la résonance secondaire à 0 ppm, par rapport à AlCl₃.

Le laitier de haut fourneau basique contient au moins 70% d'un verre à base de mellilite, eutectique formé de gehlinite et d'akermanite. Le spectre MAS-NMR pour ²⁷Al présente une large bande avec un pic accentué à 47 ppm.

Avec le mélange de cette exemple on réalise un mortier comme dans l'Exemple 1). La prise du mortier débute au bout de 30 minutes, et après 4 heures à température ambiante, la résistance à la compression est de 19 MPa, et après 24 heures de 37 MPa.

Les spectres d'analyse en Résonance Magnétique Nucléaire sont les suivants:
MAS-NMR pour ²⁷Al: résonance à 52 ppm correspondant à un tétraèdre (AlO₄) de type Q₄(4Si), et résonance à 0 ppm correspondant au cation Al en coordination VI (AlO₆) dans l'Hydroxyde d'Alumine et/ou le sulfo-aluminate de calcium hydraté (ettringite).
MAS-NMR pour ²⁹Si: pics se situant dans la zone -68 à -85 ppm correspondant au monosilicate (Qo) et au disilicate (Q1)(Q2) et bande entre -90 et 100 ppm correspondant à des silicates faisant partie d'un réseau tridimensionnel (Q4).

### Exemple 3:

On prend le mélange en poudre de l'exemple 1) et on ajoute 18 parties de scories, ou cendres vitrifiées de composition chimique suivante:

| | |
|---|---|
| CaO | 14.92 |
| SiO₂ | 52.54 |
| Fe₂O₃ | 4.25 |
| Al₂O₃ | 18.15 |
| MgO | 6.80 |
| SO₃ | 0.24 |
| TiO₂ | 0.89 |
| P₂O₅ | 0.56 |
| K₂O | 0.88 |
| Na₂O | 1.05 |

Les spectres d'analyse en Résonance Magnétique Nucléaire pour ce mélange en poudre sont les suivants:
MAS-NMR pour ²⁷Al: une résonance égale à 75 ppm correspondant à un tétraèdre (AlO₄) de type Q₀(0Si) et une résonance d'intensité double avec un large pic à 50 ppm descendant jusque 0 ppm.
MAS-NMR pour ²⁹Si: résonance principale égale à -77 ppm par rapport à TMS, correspondant à un degré de polymérisation du tétraèdre (SiO₄) égal à (Q₀) .

Avec le mélange de cet exemple 3) on réalise un mortier comme dans l'Exemple 1). La prise du mortier débute au bout de 45 minutes, et après 4 heures à température ambiante, la résistance à la compression est de 20 MPa, et après 24 heures de 42 MPa.

Les spectres d'analyse en Résonance Magnétique Nucléaire sont les suivants:
MAS-NMR pour ²⁷Al: résonance à 54 ppm correspondant à un tétraèdre (AlO₄) de type Q₄(4Si), et résonance à 0 ppm correspondant au cation Al en coordination VI (AlO₆) dans l'Hydroxyde d'Alumine et/ou le sulfo-aluminate de calcium hydraté (ettringite), le rapport entre l'intensité de résonance 54 ppm de (AlO₄) de type Q₄(4Si) et l'intensité de la résonance 0 ppm de (AlO₆), (AlO₄)/(AlO₆) est égal à 0,32.
MAS-NMR pour ²⁹Si: pics se situant dans la zone -68 à -85 ppm correspondant au monosilicate (Qo) et au disilicate (Q1)(Q2) et bande entre -90 et 100 ppm correspondant à des silicates faisant partie d'un réseau tridimensionnel (Q4).

Bien entendu, diverses modifications peuvent être apportées par l'homme de l'art aux ciments géopolymèriques et au procédé qui viennent d'être décrits uniquement à titre d'exemple, sans sortir du cadre de l'invention.

## Revendications

1. Procédé permettant de supprimer la dangereuse réaction agrégat-alcalin dans les bétons qui contiennent un ciment hydraté obtenu par l'activation alcaline d'un alumino-silicate de calcium basique x(CaO).y(Al₂O₃).(SiO₂), dans lequel "x" a une valeur comprise entre 2 et 3,5 et "y" a une valeur comprise entre 0 et 0,2, essentiellement *caractérisé* en ce que on empêche la formation dans ces bétons d'un composé pouvant générer un aluminate alcalin soluble,-ce dit composé étant constitué par un alumino-silicate alcalin hydraté qui petit être identifié par son spectre d'analyse en Résonance Magnétique Nucléaire MAS-NMR pour ²⁷Al dont la résonance à 66±5ppm correspond à un tétraèdre (AlO₄) de type Q3(3Si) -en faisant réagir par activation alcaline, une composition minérale contenant:
a) 100 parties en poids du dit alumino-silicate de calcium,
b) 10 à 30 parties en poids d'alumino-silicates synthétiques en poudre appartenant à la classe des silicates dont la structure minéralogique est en feuillet et dont le spectre d'analyse en Résonance Magnétique Nucléaire MAS-NMR pour ²⁷Al possède au moins une résonance principale à 20±5ppm et/ou 50±5ppm par rapport à AlCl₃,
c) 0 à 10 parties en poids d'un disilicate hydraté Ca(H₃SiO₄)₂ dont le degré de polymérisation du tétraèdre (SiO₄) est (Q1) comme déterminé par la valeur dit spectre MAS-NMR pour ²⁹Si.

2. Ciment rapide géopolymèrique à base de ciment portland obtenu selon le procédé de la revendication 1) *caractérisé* en ce que son spectre d'analyse en Résonance Magnétique Nucléaire MAS-NMR pour ²⁷Al ne possède pas la résonance à 66±5ppm significative d'un tétraèdre (AlO₄) de type Q3(3Si), mais par contre possède une résonance égale à 55±5ppm par rapport à AlCl₃ correspondant à un alumino-silicate alcalin hydraté dont le tétraèdre (AlO₄) est de type Q₄(4Si).

3. Ciment rapide gèopolymèrique à base de ciment portland, selon la revendication 2), dans lequel l'hydratation de l'excès d'aluminate de calcium se traduit par un spectre MAS-NMR pour ²⁷Al ayant une résonance à 0±5ppm par rapport à AlCl₃, correspondant au cation Al en coordination VI (AlO6) dans l'Hydroxyde d'Alumine et/ou le sulfo-aluminate de calcium hydraté (ettringite), *caractérisé* en ce que le rapport (AlO₄)(4Si)/(AlO6) entre l'intensité de résonance 55±5ppm de (AlO₄) de type Q₄(4Si) de l'alumino-silicate alcalin hydraté et l'intensité de la résonance 0±5ppm de (AlO6) de l'hydrate de calcium, ce dit rapport (AlO₄)(4Si)/(AlO6) est égal ou compris entre 0,1 et 1.

4. (modifiée) Composition minérale selon la revendication 1) *caractérisé* en ce que un des dits alumino-silicates synthétiques est l'oxyde alumino-silicate de formule {9[Si2O5,Al2O2],[Si2O5,Al2(OH)4]} obtenu par calcination d'un matériau kaolinitique à 700-800°C en fours fixes, le dit oxyde alumino-silicate possèdant un spectre d'analyse en Résonance Magnétique Nucléaire MAS-NMR pour ²⁷Al ayant en supplément des résonances principales à 20±5ppm et 50±5ppm, une résonance secondaire à 0±5ppm de beaucoup plus faible intensité, par rapport à AlCl₃.

5. Composition minérale selon la revendication 1) *caractérisé* en ce que un des dits alumino-silicates synthétiques est un alumino-silicate de calcium 2CaO.(Al₂O₃).SiO₂, de la famille minéralogique de la gehlinite, obtenu par vitrification d'un matériau argileux, la dite vitrification étant conduite de telle sorte que, dans le verre ainsi obtenu, le dit alumino-silicate de calcium possède un spectre d'analyse en Résonance Magnétique Nucléaire MAS-NMR pour ²⁷Al dont la résonance principale se situe à 48 ppm, par rapport à AlCl₃.

6. Procédé selon la revendication 1) caractérisé en ce que le dit disilicate hydraté Ca(H₃SiO₄)₂ est obtenu in situ par réaction alcaline de alumino-silicate de calcium de la revendication 5), 2CaO.(Al₂O₃).SiO₂, comme déterminé par l'analyse des rapport Ca₂ₚ/Si₂ₚ établie en utilisant la Spectrométrie Photoélectronique aux Rayons X (X.p.s.).

## Claims

1. A method enabling the elimination of the dangerous alkali-aggregate reaction in concretes, comprising a hydrated cement resulting from alkali activation of a basic calcium alumino-silicate x(CaO).y(Al₂O₃).(SiO₂), where "x" has a value between 2 and 3.5 and "y" has a value between 0 and 0.2, the said method being essentially characterized by the step of preventing the production of a compound which can generate a soluble alkali aluminate in these concretes, the said compound consisting of a hydrated alumino-silicate whose ²⁷Al MAS-NMR spectrum shows a resonance at 66±5ppm corresponding to a (Q₃)(3Si)-type (AlO₄) tetrahedron, wherein the said step comprises the alkali activation of a mineral composition consisting of:
a) 100 parts by weight of the said calcium alumino-silicate;
b) 10 to 30 parts by weight of a synthetic alumino-silicate belonging to the class of silicates whose mineralogical structure is lamellar and whose MAS-NMR for ²⁷Al has at least one main resonance at 20±5ppm and/or 50±5ppm in relation to AlCl₃.
c) 0 to 10 parts by weight of a hydrated disilicate Ca(H₃SiO₄)₂ whose (SiO₄) tetrahedron polymerization degree is (Q₁) as determined by the value of the MAS-NMR spectrum for ²⁹Si.

2. A rapid-set geopolymeric cement comprising portland cement according to claim 1, wherein the said Nuclear Magnetic Resonance ²⁷Al MAS-NMR spectrum does not show the resonance at 66±5ppm which characterizes (Q₃)(3Si)-type (AlO₄) tetrahedron, but displays essentially a resonance at 55±5ppm in relation to AlCl₃, corresponding to a hydrated alkali alumino-silicate with (Q₄)(4Si)-type (AlO₄) tetrahedron.

3. A rapid-set geopolymeric cement comprising portland cement according to claim 2, wherein, after hydration of the calcium aluminate in excess, the said ²⁷Al MAS-NMR spectrum shows a resonance at 0±5ppm in relation to AlCl₃, corresponding to Al in VI-fold coordination (AlO₆) in aluminum hydroxide and/or hydrated calcium sulfo-aluminate (ettringite), characterized by the ratio (AlO₄)(4Si)/(AlO₆) between the intensity of the (Q₄)(4Si)-type (AlO₄) resonance at 55±5ppm for the said hydrated alkali alumino-silicate and the intensity of the (AlO₆) resonance at 0ppm for the said calcium hydrate, the said ratio (AlO₄)(4Si)/(AlO₆) is equal to or comprised between 0.1 and 1.

4. A mineral composition according to claim 1, wherein one of the said synthetic alumino-silicates is the alumino-silicate oxide {9[Si₂O₅,Al₂O₂],[Si₂O₅,Al₂(OH)₄]} which is prepared by calcining a kaolinitic material, at 700-800°C in stationary kilns to provide an oxide alumino-silicate whose ²⁷Al MAS-NMR spectrum shows in addition to the main resonances at 20±5ppm and 50±5ppm, a secondary resonance at 0±5ppm with a much lower intensity, in relation to AlCl₃.

5. A mineral composition according to claim 1, wherein one of the said synthetic alumino-silicates is the calcium alumino-silicate gehlinite 2CaO.Al₂O₃.SiO₂, which is prepared by vitrification of clay material, the said vitrification being carried out in such a way that in the obtained glass, the said calcium alumino-silicate shows a MAS-NMR spectrum for ²⁷Al with one main resonance at 48ppm in relation to AlCl₃

6. A method according to claim 1, wherein the said hydrated disilicate Ca(H₃SiO₄)₂ is obtained by alkaline attack of the calcium alumino-silicate of Claim 5, CaO.Al₂O₃.SiO₂, as determined by analysis of the Ca₂ₚ/Si₂ₚ ratio using X-ray photoelectronic spectroscopy (X.p.s.).

## Patentansprüche

1. Verfahren zur Elimination der gefährlichen Alkali-Aggregatreaktion im Beton,-(dieser bestehend aus einem alkali-aktivierten hydratisierten Zement vom Typus eines basischen Kalzium-Aluminiumsilikats *x*(CaO).*y*(Al₂O₃).(SiO₂)-, wobei *x* einen Wert zwischen 2 und 3,5 darstellt und *y* einen Wert zwischen 0 und 0,2 darstellt), hauptsächtlich dadurch gekennzeichnet, dass in diesem Beton die Bildung eines Bestandteils verhindert wird, der ein lösliches alkalisches Aluminat hervorbringen könnte, - besagter Bestandteil besteht aus einem hydratisierten alkalischen Aluminiumsilikat, das man durch sein ²⁷Al MAS-NMR Spektrum identifieren kann,und zwar durch eine Resonanz von 66±5ppm welche einem Tetraeder (AlO₄) vom Typus Q₃(3Si) entspricht,-besagtes Verfahren die Alkali-Aktivation folgender mineralischer Mischung zur Reaktion bringt:
a) 100 Gewichtsteile besagten Kalziumaluminiumsilikats,
b) 0 bis 30 Gewichtsteile synthetischem Aluminiumsilikat in Pulverform, das zu der Klasse der Phyllosilikate gehört und deren ²⁷Al MAS-NMR Spektrum zumindest eine Hauptresonanz von 2O±5ppm und/oder 50±5ppm in Beziehung zu AlCl₃ aufweist;
c) 0 bis 10 Gewichtsteile eines hydratisierten Disilikats Ca(H₃SiO₄)₂ mit dem Polymerisationsgrad des Tetraeders (SiO₄) vom Typus (Q₁) wie der Wert des MAS-NMR für ²⁹Si angibt.

2. Schnell härtender Geopolymer-Zement aus Portlandzement nach dem Anspruch 1 hergestellt, dadurch gekennzeichnet, dass sein ²⁷Al MAS-NMR Spektrum nicht die signifikante Resonanz von 66±5ppm eines Tetraeders (Al0₄) vom Typus Q₃(3Si) zeigt, sondern eine Resonanz von 55±5ppm in Bezug zu AlCl₃ besitzt, und einem hydratisierten alkalischen Aluminiumsilikat entspricht, mit dem Tetraeder (AlO₄) vom Typus Q₄(4Si).

3. Schnell härtender Geopolymer-Zement aus Portlandzement nach dem Anspruch 2 in welchem die Hydratation des Überschusses von Kalziumaluminat sich in der ²⁷Al MAS-NMR mit einer Resonanz von 0±5ppm bezüglich AlCl₃ zeigt, was einem Al Kation in sechser Koordination (AlO₆) im Aluminiumhydroxid und/oder im hydratisierten Kalziumsulfoaluminat (Ettringit) entspricht, gekennzeichnet durch die Beziehung von (AlO₄)(4Si) zu (Al0₆) zwischen der Intensität der Resonanz 55±5ppm von (AlO₄) vom Typus Q₄(4Si) des alkalischen Aluminiumsilikats und der Intensität der Resonanz 0±5ppm von (AlO₆) von Kalziumhydrat, dass diese Beziehung (AlO₄)(4Si)/(AlO₆) gleich oder zwischen 0,1 und 1 liegt.

4. Mineralische Mischung nach Anspruch 1, dadurch gekennzeichnet, dass eines der genannten synthetischen Aluminiumsilikate ein Aluminosilikatoxid mit der Formel {9[Si₂O₅,Al₂O₂],[Si₂O₅,Al₂(OH)₄]} ist, das durch Calcinieren eines kaolinitischen Tones um 700-800°C in einem Ofen gewonnen wurde, das besagte Aluminosilikatoxid bei der ²⁷Al MAS-NMR ausser den Hauptresonanzen von 20±5ppm und 50±5ppm, eine zusätzliche Resonanz von 0±5ppm mit viel schwächerer Intensität, im Verhältnis zu AlCl₃, besitzt.

5. Mineralische Mischung nach Anspruch 1, dadurch gekennzeichnet, dass eines der genannten synthetischen Aluminiumsilikate ein Kalziumaluminiumsilikat 2CaO(Al₂O₃)SiO₂ vom Typus Gehlinit ist, und durch Verglasung eines Tones gewonnen wurde, die besagte Verglasung wird so ausgeführt, dass in dem so erhaltenen Glas das besagte Kalziumaluminiumsilikat eine, im Verhältnis zu AlCl₃, ²⁷Al MAS-NMR Hauptresonanz bei 48 ppm zeigt,.

6. Verfahren nach Anspruch 1, dadurch gekennzeichnet, dass man das besagte hydratisierte Disilikat Ca(H₂SiO₄)2 in situ durch Alkali-reaktion des Kalziumaluminiumsililikats nach Anspruch 5, 2CaO(Al₂O₃).SiO₂, erhält, wie sich durch die Analyse des Verhältnisses Ca₂ₚ/Si₂ₚ zeigt, wenn man dazu die photoelektronische Röntgenspektrometrie (X.p.s.) benutzt.
